# EUROPEAN PATENT APPLICATION

(11) **EP 1 274 140 A1**
(43) Date of publication of application: **08.01.2003**
(21) Application number: 01917771.6
(22) Date of filing: 30.03.2001
(51) Int. Cl.: H01M 4/38, H01M 10/40

(54) **NONAQUEOUS ELECTROLYTE SECONDARY CELL**

(30) Priority: 05.04.2000 JP 2000103039
(71) Applicant: MATSUSHITA ELECTRIC INDUSTRIAL CO., LTD., Kadoma-shi, Osaka 571-8501 (JP)
(72) Inventor: NITTA, Yoshiaki, Hirakata-shi, Osaka 573-1122 (JP); BITO, Yasuhiko, Miharacho, Minamikawachi-gun, Osaka 587- (JP); SATO, Toshitada, Osaka-shi, Osaka 538-0044 (JP); OKAMURA, Kazuhiro, Hirakata-shi, Osaka 573-0013 (JP); SHIMAMURA, Harunari, Moriguchi-shi, Osaka 570-0034 (JP)
(74) Representative: Nachshen, Neil Jacob
(86) International application number: JP0102842
(87) International publication number: WO01078167

(57) **Abstract**

To obtain a nonaqueous secondary battery having a large capacity and a smell irreversible capacity while maintaining cycle characteristics, a composite particle comprising a core particle composed of a solid phase A and a coating layer composed of a solid phase B covering at least a part of the core particle is used for the negative electrode of a nonaqueous secondary battery, and at least one of the solid phase A and the solid phase B is made amorphous.

## Description

### Technical Field

The present invention is related to a nonaqueous secondary battery.

### Background Art

In recent years, lithium secondary batteries used as main electrical sources for mobile communicating appliances, portable electrical appliances and the like has exhibited superior performances such as high potential force and energy density. In lithium secondary battery using metallic lithium for the negative electrode material, however, there is a possibility that a dendrite is deposited on the negative electrode during charge and may break a separator through the repetition of charge/discharge to reach to the positive electrode side, causing an internal short-circuit.

Also, the deposited dendrite has a high reactivity due to the large specific area. And, the surface thereof reacts with a solvent in an electrolyte to form an interfacial film comprising a decomposition product of the solvent, which is like a solid electrolyte lacking of electron conductivity. Accordingly, an internal resistance of the battery may enlarge and there exists on a surface of the negative electrode a particle isolated from an electronically conductive network, which becomes a factor for the decrease in a charge/discharge efficiency. For these reasons, there exists such problem that a lithium secondary batteries using metallic lithium for the negative electrode material is inferior in reliability and short in the cycle characteristics.

On the contrary thereto, at present, batteries employing a carbon material capable of absorbing and desorbing lithium ion for the negative electrode material instead of the metallic lithium has been practically used. In general, in the case where the carbon material is employed for the negative electrode, lithium ions are absorbed in the carbon in a charge reaction; as a result, the metallic lithium is not deposited, causing no problem of any internal short circuit due to dendrite. However, the theoretical capacity of graphite, which is one of the carbon materials, is 372 mAh/g and this is only about 10% of the theoretical capacity of the elemental metallic lithium.

Then, in order to improve the capacity of the lithium secondary battery, research has been conducted on a negative electrode material, which may not cause the internal short circuit due to dendrite and has a larger theoretical capacity than the carbon material. For instance, there are proposed, for the negative electrode material, an iron silicate (Japanese Laid-open patent publication No. Hei 5-159780), a silicate of non ironic metal containing a transition metal (Japanese Laid-open patent publication No. Hei 7-240201), a nickel silicate (Japanese Laid-open patent publication No. Hei 8-153517), a manganese silicate (Japanese Laid-open patent publication No. Hei 8-153538), a material containing at least one of the 4B group elements, P and Sb and having any one crystalline structure of CaF₂ type, ZnS type and AlLiSi type, (Japanese Laid-open patent publication No. Hei 9-63651), an alloy material comprising Si or Sn and Fe or Ni (Japanese Laid-open patent publication No. Hei 10-162823), an intermetallic compound comprising at least one of Si. Sn and Zn (Japanese Laid-open patent publication No. Hei 10-223221), M₍₁₋ₓ₎Siₓ wherein M = Ni, Fe, Co, Mn (Japanese Laid-open patent publication No. Hei 10-294112), MSiₓ wherein M = Ni, Fe, Co, Mn (Japanese Laid-open patent publication No. Hei 10-302770), a material composed of particles comprising a phase of Si, Sn or the like and a phase of an intermetallic compound of which the constituent element is Si, Sn or the like (Japanese Laid-open patent publication No. Hei 11-86853). Also, in European patent publication No. 0883199, there is proposed a negative electrode material having a phase A comprising Si, Sn and the like and a phase B composed of a solid solution or intermetallic compound comprising Si, Sn and the like and the other metallic element.

However, the above negative electrode having a larger capacity than the carbon material has the following problems.

For instance, from battery capacities after one cycle, 50 cycles and 100 cycles shown in Example and Comparative Example of Japanese Laid-open patent publication No. Hei 7-240201, the charge/discharge cycle characteristics of batteries, which employ a silicate of non ironic metal containing a transition element for the negative electrode, have been improved compared to those of batteries employing metallic lithium for the negative electrode material. A battery capacity of a battery employing the above silicate negative electrode material increase only about 12% at maximum compared to that of a battery employing a natural graphite negative material. Therefore, though not described in the above publication, it does not seem that the capacity of the silicate negative electrode material of non-ironic metal comprising a transition element remarkably increases compared to that of the graphite negative electrode material.

In addition, Example and Comparative Example of Japanese Laid-open patent publication No. Hei 9-63651 shows that a battery employing a material described in the publication for the negative electrode has improved charge/discharge cycle characteristics compared to a battery employing a Li-Pb alloy for the negative electrode and that it has a larger capacity than a battery employing graphite negative electrode material for the negative electrode. However, a decrease in a discharge capacity after 10 to 20 charge-discharge cycles is remarkable and the discharge capacity of Mg₂Sn, which is thought to be the most preferable one, is also lowered to about 70% of an initial capacity after about 20 cycles. There seems to be the same problems with respect to the other materials comprising Si and Sn.

Further, in Japanese Laid-open patent publication No. Hei 10-223221, an improvement in cycle characteristics is achieved by decreasing a crystallinity of an intermetallic compound comprising Si, Sn and the like, or making the intermetallic compound amorphous. It is described that the capacity maintenance ratio after 100 cycles is kept to above 70% and, however, the repetition of 200 charge/discharge cycles revealed that the capacity degradation ratio was remarkable.

On the contrary thereto, the materials shown in Japanese Laid-open patent publication No. Hei 11-86853 and European patent publication No. 0883199 exhibit remarkably improved charge/discharge cycle characteristics by covering a phase composed of Si, Sn and the like, of which the structural change through a charge/discharge cycle is large, with a phase composed of NiSi₂, Mg₂Sn or the like, of which the structural change through a charge/discharge cycle is small.

However, the above material has such a problem that the irreversible capacity through the initial charge/discharge is large. For instance, the irreversible capacity of a Mg₂Si-Si mixed phased powder is 15% of the initial charge capacity as described in Japanese Laid-open patent publication No. Hei 11-86853, and the other materials have an irreversible capacity of around 10 to 20% as described in European patent publication No. 0883199.

Further, when a high rate charge/discharge is conducted, the initial irreversible capacity becomes much larger than this. The use of a negative electrode material having a large irreversible capacity to an initial charge capacity tends to cause such a state that part of lithium ions desorbed from a positive electrode during charge is continuously held in a negative electrode for some reasons and does not completely return to the positive electrode during discharge. When such a state is occured, the number of lithium ions movable at the time of the battery operation is limited; as a result, it becomes difficult to design a battery having a maximum battery capacity. In other words, it becomes difficult to sufficiently educe a large capacity property which a material inherently has.

On the other hand, a graphite material, which is a practically used negative material at present, has an initial irreversible capacity of not larger than 8%; therefore, it is possible to design a battery having a maximum capacity by making use of the material property.

Then, it is an object of the present invention to solve the above problems and to provide a negative electrode active material having a small ratio of an irreversible capacity to an initial capacity and a nonaqueous secondary battery having a large capacity.

### Disclosure of Invention

The present invention is related to a nonaqueous electrolyte secondary battery comprising: a non-aqueous electrolyte; a separator; a positive electrode capable of absorbing and desorbing lithium; a negative electrode capable of absorbing and desorbing lithium, comprising a composite particle having a core particle composed of a solid phase A and a coating layer composed of a solid phase B covering at least a part of the surface of the core particle,
characterized in that
(1) the solid phase A contains, for the constituent element, at least one selected from the group consisting of silicon, tin and zinc,
(2) the solid phase B is composed of a solid solution or an intermetalic compound comprising a constituent element contained in the solid phase A and at least one selected from the group consisting of elements of the second to the fourteenth Groups except silicon, tin, zinc and carbon, and
(3) at least one of the solid phase A and the solid phase B is amorphous.

### Brief Description of Drawings

Fig. 1 is an X-ray diffraction pattern of Sn-Ti₆Sn₅ which is a negative electrode material according to the present invention.
Fig. 2 is a cross sectional view of a cylindrical battery in Example according to the present invention.

### Best Mode for Carrying Out the Invention

There are, presumably, various factors that cause the initial irreversible capacity which is a problem in the prior arts. The reason that the initial irreversible capacity is caused is assumed to be the following; if volume change occurs, corresponding to the amount of lithium absorbed at the initial charge, to the extent that each structure in polycrystals that constitute a particle cannot be retained, electron conductive paths through the grain boundaries are cut, thereby inducing inactivation of active sites partially. Accordingly, if such an electrical isolation of the active site is previously prevented, lithium loss, which causes the irreversible capacity at the time of initial absorption of lithium, is possibly minimized.

Thus, since the present invention employs amorphous structures for minimizing the effect of the volume change as one of the constituents thereof by previously making the size of crystallite comprising monophase as fine as possible or by making the crystallite partially disordered with the use of other elements, the aforementioned problem is solved.

More specifically, the present invention is related to a nonaqueous electrolyte secondary battery comprising: a non-aqueous electrolyte; a separator; a positive electrode capable of absorbing and desorbing lithium; a negative electrode capable of absorbing and desorbing lithium, comprising a composite particle having a core particle composed of a solid phase A and a coating layer composed of a solid phase B covering at least a part of the surface of the core particle, characterized in that
(1) the solid phase A contains, for the constituent element, at least one selected from the group consisting of silicon, tin and zinc,
(2) the solid phase B is composed of a solid solution or an intermetallic compound comprising a constituent element contained in the solid phase A and at least one selected from the group consisting of elements of the second to the fourteenth Groups except silicon, tin, zinc and carbon, and
(3) at least one of the solid phase A and the solid phase B is amorphous.

The main feature of the invention is that at least one of the solid phase A and the solid phase B that constitute the composite particle is amorphous in the negative electrode that constitute the nonaqueous electrolyte secondary battery.

Herein, the solid phase A contains, for the constituent element, at least one selected from the group consisting of silicon, tin and zinc.

Further, the solid phase B is composed of a solid solution or an intermetallic compound comprising one of silicon, tin and zinc, which are constituent elements of the solid phase A, and at least one selected from the group consisting of elements of the second to the fourteenth Groups except silicon, tin, zinc and carbon.

Preferable combinations of the solid phases A and B are given in Table 1.

**Table 1**

| Solid phase A | Solid phase B |
|---|---|
| Sn | Mg₂Sn, FeSn₂, MoSn₂, (Zn, Sn) solid solution (Cd, Sn) solid solution, (In, Sn) solid solution (Pb, Sn) solid solution, (Ti, Sn) solid solution (Fe, Sn) solid solution, or (Cu, Sn) solid solution |
| Si | Mg₂Si, CoSi₂, NiSi₂, (Zn, Si) solid solution, (Ti, Si) solid solution, (A1, Si) solid solution, or (Sn, Si) solid solution |
| Zn | Mg₂Zn₁₁, VZn₁₆, (Cu, Zn) solid solution (Al, Zn) solid solution, (Cd, Zn) solid solution, or (Ge, Zn) solid solution |

Next, "amorphous" in the present invention means having a broad scattering band having a peak at 2 values of 20° to 40° in the X-ray diffraction method using CuKa radiation. It may have a crystalline diffraction line in this case. Further, it is preferable that the half width of the peak where the strongest diffracted intensity appears against the 2 θ value is above 0.6° in the case of having a crystalline diffraction line. It is acceptable even if only one of the solid phases A and B of composite particle is amorphous or both phases are amorphous, as long as such a broad scattering band or a half band width like this is shown. Above all, it is preferable that the whole composite particle is amorphous.

With the configuration having this amorphous structure, the alloy phase with lithium incorporated or the lithium-intercalated phase can be made as fine as possible, or part of the phase can be made disordered with the use of other elements; furthermore, their crystal orientation can be randomly oriented and the stress relaxation of the whole particle at the time of initial absorption of lithium becomes possible. In these points, the amorphous structure differs from a monophase crystalline system having a relatively large crystallite size and clear-cut crystal orientation, which may induce stress strain and finer structure at the grain boundary at the time of intercalating lithium and inherently has larger effect of volume change facilitating isolation of the active site,

A crystalline has a relatively large crystallite size and clear-cut crystal orientation but, because of its high ctystallinity, the structural change due to lithium absorption is enormous within the monophasic crystallites or between the crystallites at the time of lithium intercalation, thereby vicinity of grain boundary connecting each crystallite becomes vulnerable to stress strain. If volume change occurs, corresponding to the depths of charge at the initial lithium absorption, to the extent that each structure in polycrystals that constitute a particle cannot be retained, the electron conductive paths through the grain boundaries are cut, thereby inducing inactivation of active sites partially. This is considered to bring the initial irreversible capacity.

On the contrary thereto, the present inventors presumed that previous prevention of such an isolation of the active site would minimize lithium loss which caused the irreversible capacity at the time of initial lithium absorption. Then, they devoted themselves to examining a material design wherein small effect of volume change could be estimated by making a crystallite size finer or by making a crystallite partially disordered with the use of other elements, and found incorporation of an amorphous structure as the constituent element.

The positive or negative electrodes used in the present invention can be produced by applying a mixture layer including a positive electrode active material or a negative electrode material capable of absorbing and desorbing lithium ions electrochemically and reversibly, a conductive material and a binder onto the surface of a current collector.

The negative electrode material used in the present invention comprises a composite particle having amorphous solid phase A or B.

One example of the method for producing the amorphous composite particle in the present invention is described below. Composite particles (precursor) before becoming amorphous are composed of a solid solution or an intermetallic compound, and the precursor can be obtained by mixing constituent elements at a prescribed ratio, melting them at a high temperature, quenching and solidifying the obtained melt with the use of dry spraying method, roll quenching method or rotating electrode method. The particle size is adjusted by grinding and sieving if necessary. If further necessary, composite particles having preferred structures of a solid solution or an intermetallic compound can be obtained by heat-treating the precursor at a lower temperature than the temperatures of the solidus line at a ratio of constituent element of the precursor in the constitutional diagram of alloy systems.

The above-described method is to obtain a precursor by making the solid phase B deposited to cover whole or a part of periphery of a core particle composed of a solid phase A by quenching and solidifying the melt. Composite particles can be obtained by facilitating phase uniformity of phases A and B respectively through subsequent heat treatment; however, there is also a case where the precursor may be used as composite particle as it is without heat treatment. It should be noted that the method of quenching and solidifying is not limited to the aforesaid method. Generally, the above-mentioned synthetic method is relatively difficult to procure a perfect amorphous structure and there are many cases that plenty of crystalline phases are contained; therefore, the heat treatment is preferably conducted.

Alternatively, a layer composed of elements exclusive of the constituent elements of solid phase A from the constituent element of solid phase B is adhered onto the surface of the powders having solid phase A to obtain a composite particle precursor, and the precursor is heat-treated at a lower temperature than the solidus temperature at a ratio of constituent element of the precursor in the metal constitutional diagram to obtain a composite particle of the present invention. By this heat treatment, the element in solid phase A diffuses to a layer adhered on the surface of the solid phase A, and the composition of solid phase B is given to the layer.

There is no specific limitation on the method for obtaining the composite particle precursor by making the layer adhered on the surface of powders having the solid phase A, but electroplating method, mechanical alloying method or the like are listed. Composite particle precursor is possibly employed as it is as composite particle without heat treatment in the mechanical alloying method.

It should be noted that it is difficult to eliminate the crystalline phase in these processes for producing composite particle like this. Accordingly, in order to obtain a composite particle of the present invention by making thus obtained composite particle precursor more amorphous, repetition of grinding, milling or the like can make the structure finer or isotropically place the alloy phase having unspecified ratio composition on the micro portion due to mechanochemical effect. It should be noted that it is possible to directly obtain the above-described amorphous composite particle by processing metallic powders of the desired starting material.

In the present invention, there is no limitation on the electronically conductive materials for the negative electrode if it has electron conductivity. For instance, there are graphites such as natural graphite (scaly graphite and the like), artificial graphite and expanded graphite, carbon blacks such as acetylene black, ketjen black, channel black, furnace black, lamp black and thermal black, conductive fibers such as carbon fiber and metal fiber, organic conductive materials such as polyphenylene derivatives, and they can be used alone or an in arbitrary combination of one or more. Among the artificial graphites, acetylene black and carbon fibers are particularly preferable. The amount of the conductive material to be added is not specifically limited but preferably 1 to 50% by weight of the negative electrode material (the above composite particle), particularly 1 to 30% by weight. Since the negative electrode material according to the present invention itself has electronic conductivity, it is possible to operate a battery without adding a conductive material.

The binder for the negative electrode used in the present invention may be either of a thermoplastic resin or a thermosetting resin. As the preferable binder in the present invention, there are polyethylene, polypropylene, polytetrafluoroethylene (PTFE), polyvinylidene fluoride (PVDF), styrene butadiene rubber, tetrafluoroethylene-hexafluoroethylene copolymer, tetrafluoroethylene-hexafluoropropylene copolymer (FEP), tetrafluoroethylene-perfluoroalkylvinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinyl ether-tetrafluoroethylene copolymer, ethylene-acrylic acid copolymer and ion (Na⁺) cross-linked polymer thereof, ethylene-methacrylic acid copolymer and ion (Na⁺) cross-linked polymer thereof, ethylene-methyl acrylate copolymer and ion (Na⁺) cross-linked polymer thereof, ethylene-methyl methacrylate copolymer and ion (Na⁺) cross-linked polymer thereof, and they can be used alone or in arbitrary combination of one or more.

Among the preferable binders are styrene butadiene rubber, polyvinylidene fluoride, ethylene-acrylic acid copolymer and ion (Na⁺) cross-linked polymer thereof, ethylene-methacrylic acid copolymer and ion (Na⁺) cross-linked polymer thereof, ethylene-methyl acrylate copolymer and ion (Na⁺) cross-linked polymer thereof, and ethylene-methyl methacrylate copolymer and ion (Na⁺) cross-linked polymer thereof.

As for the current collector of the negative electrode in the present invention, any electron conductor, which does not cause a chemical change in a constructed battery may be used. As for the material constituting the current collector for the negative electrode, there are, for instance, in addition to stainless steel, nickel, copper, titanium, conductive resin and the like, the composite materials which are obtained by treating the surface of copper or stainless steel with carbon or nickel. In particular, copper or copper alloy is preferable. The surfaces of those materials may be oxidized to be used, and the surface of these materials may be made concave and convex through the surface treatment. As for a form, a foil, a film, a sheet, a net, a punched sheet, a lath, a porous sheet, a foam, a molded article formed by molding fibers or the like may be employed. Though the thickness is not particularly limited, one having 1 to 500 µm is employed.

As for the positive electrode material, lithium-contained transition metal oxides may be employed. For instance, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄ (M is at least one of Na, Mg, Sc, Y, Mn, Fe, Co, Ni, Cu, Zn, Al, Cr, Pb, Sb and B, x = 0 to 1.2, y = 0 to 0.9, z = 2.0 to 2.3) can be cited. The value of x in the above is a value before charging or discharging, which increases or decreases after the charging or discharging. It is also possible to use other positive electrode materials such as a transitional metal chalcogenide, vanadium oxide and the lithium compound thereof, niobium oxide and the lithium compound thereof, a conjugate polymer using an organic conductive material, a Chevrel phase compound. In addition, it is also possible to use a mixture of a plurality of different positive electrode materials. Though the mean particle size of the positive electrode active material particle is not particularly limited, it is preferable to be 1 to 30 µm.

The conductive material used for the positive electrode used in the present invention is not limited if it does not cause any chemical change at a charge/discharge potential of a positive electrode material to be used. For instance, there are graphite such as natural graphite (scaly graphite and the like) and artificial graphite, carbon blacks such as acetylene black, ketjen black, channel black, furnace black, lamp black and thermal black, conductive fibers such as carbon fiber and metal fiber, metallic powders of fluorinated carbon, aluminum and the like, conductive wiskers of zinc oxide, potassium titanate and the like, conductive metal oxides such as titanium oxide, and organic conductive material such as poluphenylene derivatives, and they can be used alone or in an arbitrary combination of one or more. Among those conductive materials, artificial graphite and acetylene black are particularly preferable. The amount of the conductive material to be added is not particularly limited but is preferably 1 to 50% by weight, more preferably 1 to 30% by weight of the positive electrode material. When carbon or graphite is employed, 2 to 15% by weight is particularly preferable.

As the binder for the positive electrode used in the present invention, either of a thermoplastic resin or a thermosetting resin may be used. As the preferable binder in the present invention, there are polyethylene, polypropylene, polytetrafluoroethylene (PTFE), polyvinylidene fluoride (PVDF), styrenebutadiene rubber, tetrafluoroethylene-hexafluoroethylene copolymer, tetrafluoroethylene-hexafluoropropylene copolymer (FEP), tetrafluoroethylene-perfluoroalkylvinyl ether copolymer (PFA), vinylidene fluoride-hexafluoropropylene copolymer, vinylidene fluoride-chlorotrifluoroethylene copolymer, ethylene-tetrafluoroethylene copolymer (ETFE resin), polychlorotrifluoroethylene (PCTFE), vinylidene fluoride-pentafluoropropylene copolymer, propylene-tetrafluoroethylene copolymer, ethylene-chlorotrifluoroethylene copolymer (ECTFE), vinylidene fluoride-hexafluoropropylene-tetrafluoroethylene copolymer, vinylidene fluoride-perfluoromethylvinyl ether-tetrafluoroethylene copolymer, ethylene-acrylic acid copolymer or ion (Na⁺) cross-linked polymer thereof, ethylene-methacrylic acid copolymer or ion (Na⁺) cross-linked polymer thereof, ethylene-methyl acrylate copolymer or ion (Na⁺) cross-linked polymer thereof, ethylene-methyl methacrylate copolymer or ion (Na⁺) cross-linked polymer thereof, and they can be used alone or in an arbitrary combination of one or more. More preferable materials among those materials are polyvinylidene fluoride (PVDF) and polytetrafluoroethylene (PTFE).

As for the current collector for the positive electrode used in the present invention, there is no particular limitation, and any electron conductor, which does not cause a chemical change at a charge/discharge potential of the positive electrode material to be used, can be employed. As the material for constituting the current collector for the positive electrode, there are, in addition to stainless steel, aluminum, titanium, carbon, conductive resin and the like, the materials obtained by treating the surfaces of aluminum or stainless steel with carbon or titanium. In particular, aluminum or aluminum alloy is preferable. The surfaces of those materials may be oxidized to be used. The surface of the current collector is preferably made convex and concave. As for a form, a foil, a film, a sheet, a net, a punched sheet, a lath, a porous sheet, a foam, a molded article formed by molding fibers, non-woven fabric or the like can be listed. Though the thickness is not particularly limited, one having 1 to 500 µm is used.

As for the electrode mixture, in addition to a conductive material and a binder, a variety of additives such as a filler, a dispersion agent, an ion conductor, a pressure enforcement agent and the like can be used. Any fibrous materials, which do not cause a chemical change in the constructed battery, can be used as fillers. Usually, olefin polymer such as polypropylene or polyethylene, or a fiber such as glass fiber or carbon fiber may be used. Though the amount of the filler to be added is not particularly limited, 0 to 30% by weight of the electrode mixture is preferable.

As for the structure of the negative electrode plate and the positive electrode plate in the present invention, it is preferable that at least the surface of a mixture layer of the positive electrode exists facing the surface of the mixture layer of the negative electrode.

The non-aqueous electrolyte used in the present invention comprises a solvent and a lithium salt dissolved in the solvent. As for the non-aqueous solvent, there are cyclic carbonates such as ethylene carbonate (EC), propylene carbonate (PC), butylene carbonate (BC) and vinylene carbonate (VC), chain carbonates such as dimethyl carbonate (DMC), diethyl carbonate (DEC), ethyl-methyl carbonate (EMC) and dipropyl carbonate (DPC), aliphatic carboxylic acid esters such as methyl formate, methyl acetate, methyl propionate and ethyl propionate, γ-lactones such as γ-butyrolactone, chain ethers such as 1,2-dimethoxy ethane (DME), 1,2-diethoxy ethane (DEE) and ethoxy-methoxy ethane (EME), cyclic ethers such as tetrahydrofuran and 2-methyl tetrahydrofuran, non protonic organic solvents such as dimethyl sulfoxide, 1,3-dioxolane, formamide, acetoamide, dimethyl formamide, dioxolane, acetonitrile, propylnitrile, nitromethane, ethylmonogrime, phosphoric acid triester, trimethoxy methane, dioxolane derivatives, sulfolane, methylsulfolane, 1,3-dimethyl-2-imidazolidinone, 3-methyl-2-oxazolidinone, propylene carbonate derivatives, tetrahydofuran derivatives, ethyl ether, 1,3-propanesalton, anisole, dimethylsulfoxide and N-methylpyrolidone, and they can be used alone or in an arbitrary combination of one or more. Particularly, a mixture solvent of a cyclic carbonate and a chain carbonate, or a mixture solvent of a cyclic carbonate, a chain carbonate and an aliphatic carboxylic acid ester are preferable.

As for the lithium salt dissolved in those solvents, there are LiClO₄, LiBF₄, LiPF₆, LiAlCl₄, LiSbF₆, LiSCN, LiCl, LiCF₃SO₃, LiCF₃CO₃, Li(CF₃SO₂)₂, LiAsF₆, LiN(CF₃SO₂)₂, LiB₁₀Cl₁₀, lithium lower aliphatic carboxylate, LiCl, LiBr, LiI, chloroboranlithium, lithium tetraphenyl borate and imidos, and they can be used alone or in an arbitrary combination of two or more. In particular it is preferable to add LiPF₆.

The particularly preferable nonaqueous electrolyte in the present invention is an electrolyte comprising at least ethylene carbonate and ethyl methyl carbonate and, as the supporting salt, LiPF₆. The amount of the electrolyte to be added in the battery is not particularly limited and may be selected based on the amounts of the positive electrode material and the negative electrode material, the size of the battery and the like. Though the amount of the supporting electrolyte to be dissolved in the non-aqueous solvent is not particularly limited, 0.2 to 2 mol/l is preferable. Particularly, it is more preferable to be 0.5 to 1.5 mol/l.

Instead of the electrolyte solution, The following solid electrolytes can be used. The solid electrolyte can be categorized to the inorganic solid electrolyte and the organic solid electrolyte. As for the inorganic solid electrolyte, nitride, halogenide, oxyacid and the like of lithium are well known. Particularly, Li₄SiO₄, Li₄SiO₄-LiI-LiOH, xLi₃PO₄-(1-x)Li₄SiO₄, Li₂SiS₃, Li₃PO₄-Li₂S-SiS₂, phosphorous sulfide compound and the like are effective. As for the organic solid electrolyte, polymer materials such as polyethylene oxide, polypropylene oxide, polyphosphazen, polyaziridine, polyethylene sulfide, polyvinylalcohol, polyvinylidene fluoride, polyhexafluoropropylene and their derivatives, mixtures and composites are effective.

Furthermore, for the purpose of improving the discharge capacity and the charge/discharge characteristics, it is effective to add other compounds to the electrolyte. For example, triethylphosphite, triethanolamine, cyclic ethers, ethylenediamine, n-grime, pyridine, hexaphosphate triamide, nitrobenzene derivatives, crown ethers, the fourth ammonium salts, ethylene glycol-dialkyl ether and the like can be cited.

As for the separator used in the present invention, a micro-porous film having a large ion permeability, a predetermined mechanical strength and an insulating property is used. It is also preferable to have a function to close a pore at a certain temperature or higher so as to increase the resistance. From the viewpoint of the chemical resistance to organic solvent and hydrophobic property, a sheet composed of an olefin polymer such as polypropylene, polyethylene or the mixture thereof, a sheet composed of a non-woven fabric, a woven fabric or glass fibers, or a non-woven fabric, a woven fabric or the like may be used. The pore diameter of the separator is preferably in the range where the positive and negative electrode materials, the binder and the conductive material, which have desorbed from the electrode sheets, do not permeate, and it is desirable to be, for example, in a range of 0.01 to 1 µm. As for the thickness of the separator, 10 to 300 µm is generally used. And the vacancy ratio is determined in accordance with the permeability of electrons and ions, materials, an osmotic pressure and the like, and generally 30 to 80% is preferable.

It is also possible to constitute a battery in which a polymer material absorbing and retaining an organic electrolyte comprising a solvent and a lithium salt dissolved therein is held in a positive electrode mixture and a negative electrode mixture and, further, a porous separator composed of a polymer absorbing and retaining an organic electrolyte is integrated with a positive electrode and a negative electrode, respectively. As for the polymer material, any ones capable of absorbing and retaining an organic electrolyte may be used and, in particular, vinylidene fluoride-hexafluoropropylene copolymer is preferable.

Any forms of the batteries are applicable such as a coin type, a button type, a sheet type, a stacked type, a cylindrical type, a flat type, a rectangular type, a large type used for electric vehicles or the like.

A non-aqueous electrolyte secondary battery in accordance with the present invention can be used for a portable information terminal, a portable electronic appliances, a home use compact power storage device, a motor bike, an electric vehicle, a hybrid electric vehicle or the like, but is not particularly limited thereto.

The present invention is described in further detail in accordance with the following examples. The present invention is not limited to those examples.

### Example 1

### (1) Production method of the negative electrode material

Table 2 shows compositions of solid phases A and B (element as simple substance, intermetallic compound or solid solution), mixing ratio of raw materials (atom%), melting temperature and solidus temperature of the negative electrode material (composite particles "a" to "v") employed in the present example. A production method of the present example is described concretely below.

Powders or blocks composed of each element, which constituted the negative electrode material, was introduced in a melting bath at a mixing ratio shown in Table 2, and then melted at a melting temperature shown in the table, the obtained melt was quenched and solidified to obtain a solid. Subsequently, the solid was heat-treated at a temperature 10 to 50°C lower than the solidus temperature of the solid solution or the intermetallic compound shown in Table 2 in an inert atmosphere for 20 hours. The heat-treated solid was added in a planetary-style ball mill container, and then mechanically ground for 30 minutes or 2 hours using a stainless ball having a diameter of 15 mm at a motor rotation speed of 3700 rpm so that 15 G was applied thereto. After that, it was classified through a sieve to obtain composite particles "a1" to "v1" (30 minutes of mechanical grinding) and composite particles "a2" to "v2" (2 hours of mechanical grinding) having a particle size of 45 µm or less. These compound particles were examined under a microscope; as a result, it was confirmed that the whole surface or part of the surface of a core particle composed of a solid phase A was covered with solid a phase B.

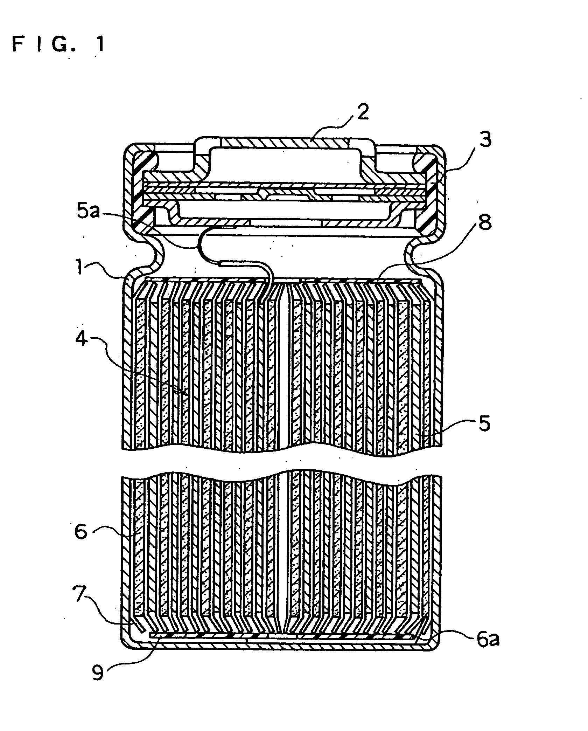

It was also confirmed by X-ray diffraction that a composite particle before the mechanical grinding treatment was a crystalline material having a sharp peak. Fig. 1 shows an X-ray diffraction pattern of the composite particle "e" which was subjected to the mechanical grinding treatment. As is evident from Fig. 1, when the mechanical grinding treatment was performed for 30 minutes, the peak started to become broad and the crystalline state became broken. However, the crystalline state was still retained at this stage. On the other hand, when the mechanical grinding treatment was performed for two hours, it was found that each characteristic peak became completely broken to turn into the state where identification as crystal was impossible, that is, into the amorphous state. The similar change was observed in other composite particles "a" to "v".

The radial distribution was also investigated to find not that each element formed an amorphous having random state but that the amorphous state was formed by finely dividing or finely crystallizing crystallite or crystal grain boundary. This indicates that at least one of solid phases A and B forms the amorphous phase in which crystal is finely divided.

**Table 2**

| Composite particle | Solid phase A | Solid phase B | Melting temp. | Solidus temp. | Material mixing ratio (atom%) |
|---|---|---|---|---|---|
| A | Sn | Mg₂Sn | 770 | 204 | Sn:Mg=50:50 |
| B | Sn | FeSn₂ | 1540 | 513 | Sn:Fe=70:30 |
| C | Sn | MoSn₂ | 1200 | 800 | Sn:Mo=70:30 |
| D | Sn | Cu₆Sn₅ | 1085 | 227 | Sn:Cu=50:50 |
| E | Sn | Ti₆Sn₅ | 1670 | 231 | Sn:Ti=50:50 |
| F | Sn | Zn, Sn solid solution | 420 | 199 | Sn:Zn=90:10 |
| G | Sn | Cd, Sn solid solution | 232 | 133 | Sn:Cd=95:5 |
| H | Sn | In, Sn solid solution | 235 | 224 | Sn:In=98:2 |
| I | Sn | Sn, Pb solid solution | 232 | 183 | Sn:Pb=80:20 |
| J | Si | Mg₂Si | 1415 | 946 | Si:Mg=70:30 |
| K | Si | CoSi₂ | 1495 | 1259 | Si:Co=85:15 |
| L | Si | NiSi₂ | 1415 | 993 | Si:Ni=69:31 |
| M | Si | TiSi₂ | 1670 | 1330 | Si:Ti=87:13 |
| N | Si | Si, Zn solid solution | 1415 | 420 | Si:Zn=50:50 |
| O | Si | Si, Al solid solution | 1415 | 577 | Si:Al=40:60 |
| P | Si | Si, Sn solid solution | 1415 | 232 | Si:Sn=50:50 |
| Q | Zn | Mg₂Zn₁₁ | 650 | 364 | Zn:Mg=92.2:7.8 |
| R | Zn | Cu, Zn solid solution | 1085 | 425 | Zn:Cu=97:3 |
| S | Zn | VZn₁₆ | 700 | 420 | Zn:V=94:6 |
| T | Zn | Zn, Cd solid solution | 420 | 266 | Zn:Cd=50:50 |
| U | Zn | Zn, A1 solid solution | 661 | 381 | Zn:Al=90:10 |
| V | Zn | Zn, Ge solid solution | 938 | 394 | Zn:Ge=97:3 |

### (2) Production method of the cylindrical battery

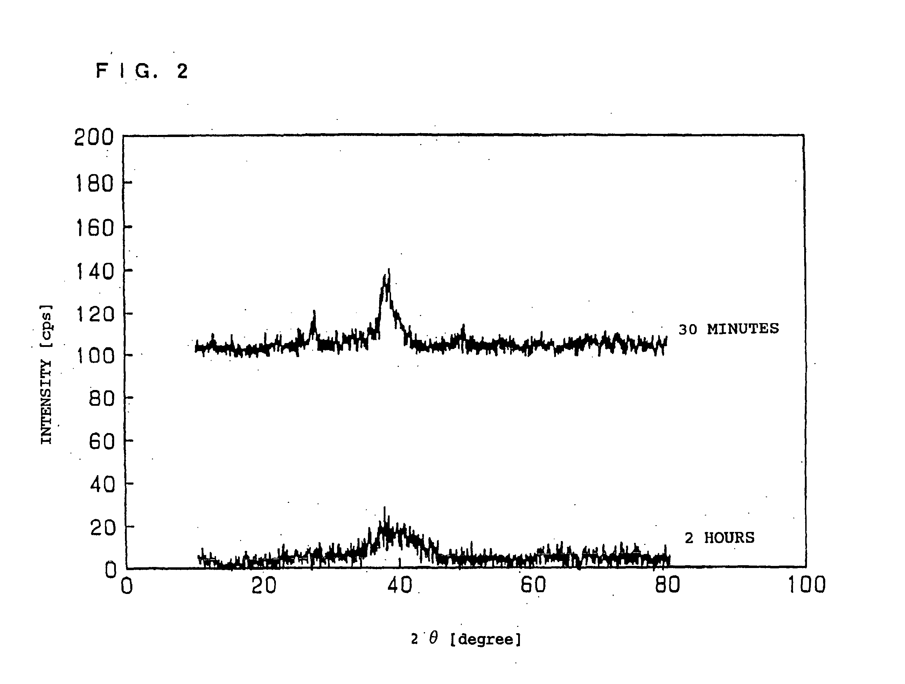

Fig. 2 shows a cross sectional view of a cylindrical battery produced in this example. The cylindrical battery shown in Fig. 2 comprises a battery case 1 obtained by processing a stainless steel sheet having chemical resistance to organic electrolyte, a sealing plate 2 equipped with a safety valve, an insulating gasket 3. An electrode assembly 4 is formed such that a separator 7 is interposed between a positive electrode plate 5 and a negative electrode plate 6 and the whole is spirally wound several times, and housed in the battery case 1. A positive electrode lead 5a drawn out from the positive electrode plate 5 is connected to the sealing plate 2, and a negative electrode lead 6a drawn out from the negative electrode plate 6 is connected to the bottom of the battery case 1. Insulating rings 8 are respectively provided above and below the electrode assembly 4.

The negative electrode plate 6 was produced as follows: 75 parts by weight of the negative electrode material (composite particle) obtained above, 20 parts by weight of carbon powder serving as conductive material and 5 parts by weight of polyvinylidene fluoride resin serving as binder were mixed, the obtained mixture was dispersed in a dehydrated N-methylpyrrolidinone to obtain a slurry, the slurry was applied onto the negative electrode current collector made of copper foil, dried and then the whole was rolled.

On the other hand, the positive electrode plate 5 was produced as follows: 85 parts by weight of lithium cobaltate powder, 10 parts by weight of carbon powder serving as conductive material and 5 parts by weight of polyvinylidene fluoride resin serving as binder were mixed, the obtained mixture was dispersed in a dehydrated N-methylpyrrolidone to obtain a slurry, the slurry was applied onto the positive electrode current collector made of aluminum foil, dried and then the whole was rolled.

As for the non-aqueous electrolyte, a mixed solvent of ethylene carbonate and ethyl methyl carbonate at a volume ratio of 1:1 dissolved with LiPF₆ to make the concentration 1.5 mol/liter was used.

A separator 7 was interposed between a positive electrode plate 5 and a negative electrode plate 6, the whole was spirally wound and housed in the battery case having a diameter of 18 mm and a height of 65 mm. After the electrolyte was introduced in the electrode assembly 4, the battery was sealed to obtain a test battery.

Batteries "a1" to "v1" and "a2" to "v2" using the composite particles "a1" to "v1" and "a2" to "v2" shown in Table 3 were produced in the same way described above.

After charged to 4.1 V at a constant current of 0.6 A, the batteries were discharged to 2.0 V at a constant current of 2 A, and then irreversible capacity ((1-discharge capacity/charge capacity)× 100%) after one cycle was measured. The results are shown in Table 3. Incidentally, the test was conducted in a constant temperature bath of 20°C.

**Table 3**

| Composite particle | Solid phase A | Solid phase B | 30 min. Mechanical grinding irreversible capacity (%) | 2 hours Mechanical grinding irreversible capacity (%) | Untreated (%) |
|---|---|---|---|---|---|
| a | Sn | Mg₂Sn | 32 | 16 | 39 |
| b | Sn | FeSn₂ | 33 | 14 | 39 |
| c | Sn | MoSn₂ | 32 | 14 | 38 |
| d | Sn | Cu₆Sn₅ | 34 | 18 | 40 |
| e | Sn | Ti₆Sn₅ | 31 | 15 | 38 |
| f | Sn | Zn, Sn solid solution | 32 | 17 | 38 |
| g | Sn | Cd, Sn solid solution | 33 | 16 | 37 |
| h | Sn | In, Sn solid solution | 33 | 16 | 38 |
| i | Sn | Sn, Pb solid solution | 34 | 16 | 39 |
| j | Si | Mg₂Si | 34 | 15 | 38 |
| k | Si | CoSi₂ | 34 | 16 | 37 |
| l | Si | NiSi₂ | 35 | 16 | 37 |
| m | Si | TiSi₂ | 35 | 17 | 38 |
| n | Si | Si, Zn solid solution | 34 | 15 | 37 |
| o | Si | Si, Al solid solution | 37 | 16 | 39 |
| p | Si | Si, Sn solid solution | 35 | 17 | 37 |
| q | Zn | Mg₂Zn₁₁ | 38 | 16 | 38 |
| r | Zn | Cu, Zn solid solution | 38 | 17 | 38 |
| s | Zn | VZn₁₆ | 37 | 18 | 37 |
| t | Zn | Zn, Cd solid solution | 39 | 14 | 38 |
| u | Zn | Zn, Al solid solution | 36 | 16 | 37 |
| v | Zn | Zn, Ge solid solution | 37 | 17 | 39 |

Table 3 clearly demonstrates a tendency for the irreversible capacity to decrease by adding a grinding treatment. This is considered to be because a part of or large part of active material particle changed into amorphous structure or finely-crystallized structure by increasing the treatment time from 0.5 to 2 hours as reflecting amorphous phenomenon observed in X-ray diffraction pattern shown in Fig. 1, thereby characteristic improvement was achieved.

Although not shown in the table, batteries "a2" to "v2" all exhibited a higher capacity by 30% or more compared to the case of using a negative electrode made of carbon such as graphite and a similar decreasing ratio in the capacity after 100 cycles as the case of using a negative electrode made of carbon such as graphite.

Incidentally, in the negative electrode material used in the present example, Mg as the 2 Group element, Fe, Ti, Cu and Mo as transition element, Zn and Cd as the 12 Group element, In as the 13 Group element and Pb as the 14 Group element were used as elements constituting the solid phase B when the solid phase A was constituted with Sn. However, the use of other elements of each group in addition to above also gave similar effect.

When the solid phase A is constituted with Si, Mg as the 2 Group element, Co, Ti and Ni as transition element, Zn as the 12 Group element, Al as the 13 Group element and Sn as the 14 Group element were used as elements constituting the solid phase B. However, the use of other elements of each group in addition to above also gave similar effect.

Further, when the solid phase A is constituted with Zn, Mg as the 2 Group element, Cu and V as transition element, Cd as the 12 Group element, Al as the 13 Group element and Ge as the 14 Group element were used as elements constituting the solid phase B. However, the use of other elements of each group in addition to above also gave similar effect.

In addition, the mixing ratio of the constituent elements of the negative electrode material is not particularly limited and it is acceptable as long as the obtained negative electrode material is a composite particle having two phases wherein one phase (a solid phase A) is mainly composed of Sn, Si and Zn and another phase (a solid phase B) covers the whole or a part of periphery thereof and further at least one of two phases is amorphous. The ratio of the elements to be prepared is not particularly limited if these conditions are satisfied.

The solid phase A may contain not only Sn, Si or Zn but also other elements such as O, C, N, S, Ca, Mg, Al, Fe, W, V, Ti, Cu, Cr, Co and P in trace amounts. Likewise, the solid phase B is not only composed of a solid solution or an intermetallic compound, but also may contain elements constituting each solid solution or intermetallic compound or other elements such as O, C, N, S, Ca, Mg, Al, Fe, W, V, Ti, Cu, Cr, Co and P in trace amounts.

### Industrial Applicability

The present invention can provide a nonaqueous electrolyte secondary battery having a high capacity and a smaller irreversible capacity while maintaining good cycle characteristics as described above.

## Claims

1. A nonaqueous electrolyte secondary battery comprising: a non-aqueous electrolyte; a separator; a positive electrode capable of absorbing and desorbing lithium; a negative electrode capable of absorbing and desorbing lithium, comprising a composite particle having a core particle composed of a solid phase A and a coating layer composed of a solid phase B covering at least a part of said core particle, **characterized in that**
(1) said solid phase A contains, for the constituent element, at least one selected from the group consisting of silicon, tin and zinc,
(2) said solid phase B is composed of a solid solution or an intermetallic compound comprising a constituent element contained in said solid phase A and at least one selected from the group consisting of elements of the second to the fourteenth Groups except silicon, tin, zinc and carbon, and
(3) at least one of said solid phase A and said solid phase B is amorphous.
